# EUROPÄISCHE PATENTSCHRIFT

(11) **EP 2 345 569 B1**
(45) Veröffentlichungstag und Bekanntmachung des Hinweises auf die Patenterteilung: **20.03.2013**
(21) Anmeldenummer: 11150692.9
(22) Anmeldetag: 12.01.2011
(51) Int. Cl.: B62D 5/04, F16H 55/24, F16H 1/16

(54) **Schraubradgetriebe für eine Lenkung eines Kraftfahrzeugs**
Screw gearing for the steering of a motor vehicle
Engrenage hypoïde pour une direction d'un véhicule automobile

(30) Priorität: 13.01.2010 DE 102010000851
(43) Veröffentlichungstag der Anmeldung: 20.07.2011
(73) Patentinhaber: ZF Lenksysteme GmbH, 73527 Schwäbisch Gmünd (DE)
(72) Erfinder: Grau, Marco, 73527, Schwäbisch Gmünd (DE); Füchsel, Dennis, 73527, Schwäbisch Gmünd (DE); Kneer, Ekkehard, 73240 Wendlingen (DE); Hafermalz, Jens-Uwe, 73116, Wäschenbeuren (DE); Kuhlen, Arne, 73614, Schorndorf (DE)

(56) Entgegenhaltungen:
- DE-A1- 10 161 715
- JP-A- 2002 067 991

## Beschreibung

Die Erfindung betrifft ein Schraubradgetriebe, insbesondere ein Schneckengetriebe, gemäß dem Oberbegriff des Anspruchs 1. Die Erfindung betrifft ferner eine elektrische Hilfskraftlenkung mit einem Schraubradgetriebe gemäß Anspruch 10.

Aus der DE 101 61 715 A1 ist ein gattungsgemäßes Schraubradgetriebe in der Ausgestaltung eines Schneckengetriebes für den Einsatz in einer elektrischen Hilfskraftlenkung bekannt.

Das in der DE 101 61 715 A1 beschriebene Schneckengetriebe ist in einem Gehäuse angeordnet und weist eine Schnecke sowie ein Schneckenrad auf. Die Schnecke ist mittels einer Kupplung mit einer Antriebswelle eines elektrischen Antriebsmotors verbunden. Bei der dort gezeigten Konstruktion ist die Schnecke senkrecht zur Drehachse schwenkbar und in einem Schwenk- bzw. Pendellager gelagert, wodurch das Verzahnungsspiel während der gesamten Lebensdauer des Getriebes konstant gehalten werden kann. Hierzu wird die Schnecke radial mit einer Vorspannungskraft beaufschlagt und permanent gegen die Verzahnung des Schneckenrads (bzw. des Schraubrads) gedrückt. Es hat sich bei solchen Konstruktionen gezeigt, dass Drehrichtungswechsel bzw. Lastwechsel im Getriebe zusammen mit einem vorhandenen Zahnflankenspiel dazu führen können, dass die Zahnflanken des Schraubritzels bzw. der Schnecke mit den Zahnflanken des Schraubrads bzw. des Schneckenrads aufeinander prallen und schlagende Geräusche verursachen. Trotzdem sollte bei der Montage kein zu geringes Zahnflankenspiel eingestellt werden, da dies negativen Einfluss auf den Wirkungsgrad sowie den Verschleiß des Getriebes haben kann. Außerdem können dadurch die Rückführungseigenschaften einer Hilfskraftlenkung verschlechtert werden, was wiederum das Lenkgefühl beim Fahrer verschlechtert.

Die maximale Vorspannung, mit der die Schnecke in das Schneckenrad gedrückt werden kann, ist begrenzt, da es ansonsten zu einer Verklemmung des Schneckenradgetriebes kommen würde.

Die bei elektrischen Lenksystemen eingesetzten Schraubräder- bzw. Schneckenräder sind häufig aus Kunststoff gefertigt. Über die Gebrauchsdauer unterliegen diese Kunststoffteile einem Setzen bzw. einem Verschleiß. Damit die Anfederung der Schnecken gegen das Schneckenrad über die gesamte Gebrauchsdauer gewährleistet ist, wird bei den aus dem allgemeinen Stand der Technik bekannten Schraubrad- bzw. Schneckengetrieben im Neuzustand eine sehr große Anfederkraft aufgebracht, die sich im Laufe der Gebrauchsdauer durch eine Verzahnungsspielzunahme verringert. Dies führt im Neuzustand zu Reibungserhöhungen und somit zu Wirkungsgradnachteilen im Getriebe.

Zum weiteren Stand der Technik wird auf die DE 10 2008 000 506 A1 verwiesen.

Der vorliegenden Erfindung liegt die Aufgabe zugrunde, die vorgenannten Nachteile des Standes der Technik zu lösen, insbesondere eine einfache und kostengünstig zu realisierende Lösung zu schaffen, bei der die Reibung im Getriebe minimiert wird, ein verbesserter Wirkungsgrad erreicht werden kann, die Anfederkraft über die Gebrauchsdauer möglichst konstant ist und eine ungewollte Geräuschentwicklung im Getriebe weitgehend reduziert wird.

Diese Aufgabe wird erfindungsgemäß durch Anspruch 1 gelöst.

Eine vorteilhafte elektrische Hilfskraftlenkung für Kraftfahrzeuge ergibt sich aus Anspruch 10.

Die erfindungsgemäße Lösung führt zu einer Reibungsminimierung im Getriebe und erhöht den Wirkungsgrad, da eine kontinuierliche Anfederung mit nahezu gleichbleibender Anfederkraft während der gesamten Gebrauchsdauer erreicht wird. Es ist nicht notwendig, dass im Neuzustand eine sehr große Anfederkraft aufgebracht wird. Durch die kontinuierliche Anfederung mit einer nahezu gleichbleibenden Anfederkraft werden zudem Klappergeräusche bzw. störende Geräusche über die gesamte Gebrauchsdauer vermieden bzw. weitgehend reduziert. Aufgrund des einfachen Aufbaus der erfindungsgemäßen Lösung werden die Anforderungen an die Montage reduziert. Hierbei ist es von besonderem Vorteil, dass montageseitig keine Einstellung der Anfederung des Schraubritzels bzw. der Schnecke erforderlich ist, da sich die notwendige Anfederung durch die erfindungsgemäße Lösung selbständig einstellt.

Die erfindungsgemäße Lösung erhöht die Robustheit des Schraubradgetriebes und somit der gesamten Hilfskraftlenkung. Aufgrund der sich durch die Erfindung ergebenden selbsttätigen Kompensation von Achsabstandsänderungen sind nur noch geringe Anfederungskräfte erforderlich.

Die erfindungsgemäße Lösung ermöglicht eine Toleranz-, Verschleiß- und Temperaturkompensation im Verzahnungseingriff zwischen dem Schraubritzel und dem Schraubrad über die gesamte Lebensdauer.

Durch die erfindungsgemäße Lösung wird die Funktion "Realisierung des Grundspiels", um insbesondere Temperaturausdehnungen sowie Rundlauftoleranzen zu kompensieren, und die Funktion "Realisierung der Nachstellung", um insbesondere ein Nachstellen zum Beispiel aufgrund von Setzen oder Verschleiß in den Verzahnungskomponenten zu ermöglichen, in besonders vorteilhafter Weise voneinander getrennt.

Das erfindungsgemäße Schraubradgetriebe für eine Lenkung eines Kraftfahrzeuges, vorzugsweise für eine elektrische Lenkung, insbesondere eine elektrische Hilfskraftlenkung eines Kraftfahrzeugs, weist ein Schraubritzel auf, welches in ein Schraubrad eingreift. Vorgesehen ist dabei eine Vorspannungseinrichtung mit einem Druckstück, welches das Schraubritzel in eine Verzahnung des Schraubrads drückt.

Die Vorspannungseinrichtung weist dabei ein Gehäuseteil auf, in dem eine Aufnahme axial verschieblich gelagert ist. Die Aufnahme weist ein Gewinde, vorzugsweise ein Innengewinde, auf, in das das Druckstück eingeschraubt ist. Das Druckstück steht dabei vorzugsweise in Richtung auf das Schraubritzel über die Aufnahme über.

Die Aufnahme ist mittels eines Vorspannungsglieds, vorzugsweise einer Feder, in Richtung auf das Schraubritzel vorgespannt. Dadurch wird das Druckstück gegenüber dem Schraubritzel vorgespannt.

Erfindungsgemäß ist ferner ein Nachstellglied, vorzugsweise in Form einer Drehfeder, vorgesehen, welches auf das Druckstück eine Kraft, vorzugsweise ein Drehmoment, ausübt, die geeignet ist, eine relative Verdrehung des Druckstücks gegenüber der Aufnahme zu bewirken, welche durch die Gewindeverbindung des Druckstücks mit der Aufnahme in eine Axialbewegung des Druckstücks gegenüber der Aufnahme in Richtung auf das Schraubritzel umgewandelt wird.

Wesentlich ist hinsichtlich der Kraft, die auf das Druckstück wirkt, dass diese geeignet ist, eine relative Verdrehung des Druckstücks gegenüber der Aufnahme, d. h. eine relative Rotation des Druckstücks in dem Gewinde, zu erreichen. Es ist dabei erfindungsgemäß nicht relevant, ob diese relative Verdrehung dadurch bewirkt wird, dass sich die Aufnahme dreht und/oder das Druckstück selbst rotiert. Eine Verdrehung des Druckstücks in der Aufnahme bzw. deren Gewinde, ohne dass sich die Aufnahme dreht, lässt sich beispielsweise dadurch erreichen, dass die Aufnahme in dem Gehäuseteil der Vorspannungseinrichtung nicht nur axial verschieblich, sondern auch verdrehsicher gelagert ist.

Zur Realisierung der Erfindung ist es jedoch nicht zwingend, dass die Aufnahme in dem Gehäuseteil verdrehgesichert gelagert sein. Wenn sich die Aufnahme in dem Gehäuseteil drehen kann, kann eine Drehbewegung zwischen der Aufnahme und dem Druckstück auch dadurch erzeugt werden, dass das Nachstellglied die Aufnahme und somit das Gewinde, in das das Druckstück eingeschraubt ist, dreht. Auch dadurch ergibt sich die erfindungsgemäß vorgesehene Axialbewegung des Druckstücks gegenüber der Aufnahme. In einer weiteren Ausgestaltung der Erfindung kann auch vorgesehen sein, dass durch das Nachstellglied, vorzugsweise in Form einer Drehfeder, sowohl die Aufnahme als auch das Druckstück gedreht wird. Auch dadurch lässt sich eine Axialbewegung des Druckstücks in der Aufnahme erreichen.

Insofern die Aufnahme in dem Gehäuseteil nicht gegen ein Verdrehen gesichert ist, kann es von Vorteil sein, wenn die Aufnahme in dem Gehäuseteil vor deren Montage in ein Schraubradgetriebe durch einen Bolzen, einen Stift oder eine andere Maßnahme gegen ein Verdrehen gesichert ist, so dass die Vorspannung des Nachstellgliedes, insbesondere einer Drehfeder, erhalten bleibt. Nach der Montage in das Schraubradgetriebe kann dann die Transportsicherung gelöst werden, so dass eine Verdrehung zwischen der Aufnahme und dem Gehäuseteil möglich ist.

Nachfolgend wird eine Verdrehung des Druckstücks in der Aufnahme anhand einer Ausführungsform näher beschrieben, bei der vorgesehen ist, dass die Aufnahme in dem Gehäuseteil axial verschieblich und verdrehsicher gelagert ist. Es versteht sich jedoch von selbst, dass alle nachfolgend beschriebenen Merkmale und Ausführungsbeispiele auch in Kombination mit einer nicht verdrehsicher gelagerten Aufnahme realisiert werden können.

Die Aufgabe der Vorspannungseinrichtung ist es, das Schraubritzel in allen Betriebszuständen mit einer genau definierten Kraft in Richtung Schraubrad zu beaufschlagen. Die Vorspannungseinrichtung beaufschlagt das Schraubritzel hierzu vorzugsweise mit einer radial wirkenden Kraft. Die Beaufschlagung mit einer möglichst genau definierten Kraft ist vorteilhaft, um einerseits einen möglichst guten Wirkungsgrad für das Getriebe zu erzielen und andererseits die Belastung der Verzahnung des Getriebes gering zu halten. Die Vorspannungseinrichtung soll dabei vorzugsweise verschiedene Einflussfaktoren kompensieren, welche fertigungsbedingt vorhanden sind oder während des Betriebs des Schraubradgetriebes auftreten. Hierzu ist vorzugsweise ein gewisses Grundspiel durch die Vorspannungseinrichtung zu realisieren, um eine Temperaturausdehnung sowie Rundlauftoleranzen der Komponenten des Schraubradgetriebes ausgleichen zu können. Innerhalb dieses Grundspiels sollte die Druckkraft der Vorspannungseinrichtung eine genau definierte Untergrenze sowie eine definierte Obergrenze nicht unter- bzw. überschreiten.

Das Grundspiel wird erfindungsgemäß dadurch realisiert, dass die Aufnahme mittels des Vorspannungsglieds, vorzugsweise der Feder, in Richtung auf das Schraubritzel vorgespannt ist. Das in die Aufnahme eingeschraubte Druckstück kann sich somit (vorgespannt) gegenüber dem Schraubritzel bewegen, um das Grundspiel zur Verfügung zu stellen, insbesondere um Temperaturausdehnungen sowie Rundlauftoleranzen der Komponenten des Schraubradgetriebes auszugleichen. Das Gewinde ist dabei derart gestaltet, dass sich das Druckstück in dem Gewinde der Aufnahme nicht dreht, wenn das Druckstück durch Axialkräfte belastet wird, welche von dem Schraubritzel auf das Druckstück übertragen werden. Das Druckstück und die Aufnahme bilden somit gegenüber einer in diese Richtung wirkenden Axialkraft (Abweisungskraft) eine feste und relativ zueinander verdrehsichere Einheit, so dass die Vorspannung der Aufnahme gleichzeitig als Vorspannung des Druckstücks wirkt.

Des weiteren soll die Vorspannungseinrichtung den Verschleiß des Schraubradgetriebes sowie speziell das Setzen des Zahnkranzes, insbesondere eines Kunststoffzahnkranzes des Schraubrads sowie gegebenenfalls weitere Bauteiltoleranzen automatisch kompensieren können. Dies wird erfindungsgemäß dadurch erreicht, dass ein Nachstellglied, vorzugsweise eine Drehfeder, vorgesehen ist, welche auf das in die Aufnahme eingeschraubte Druckstück eine Kraft, vorzugsweise ein Drehmoment, ausübt, die geeignet ist, eine Drehbewegung des Druckstücks zu bewirken. Besonders einfach lässt sich dies dadurch erreichen, dass es sich bei dem Nachstellglied um eine Drehfeder handelt, welche ein Drehmoment, d. h. eine Rotationsbewegung auf das Druckstück aufbringt. Das Drehmoment ist dabei derart gewählt, dass das Druckstück in der Aufnahme so gedreht wird (rotiert), dass das Druckstück aufgrund der Gewindeverbindung in Richtung auf das Schraubritzel aus der Aufnahme herausgeschraubt wird, d. h. gegenüber der Aufnahme eine Axialbewegung in Richtung auf das Schraubritzel durchführt.

Grundsätzlich ist es nicht zwingend notwendig, dass es sich bei dem Nachstellglied um eine Drehfeder handelt. Es könnte auch eine andere Feder oder ein anderes Element vorgesehen sein, das sich eignet, eine Kraft so auf das Druckstück auszuüben, dass dieses eine Drehbewegung in der Aufnahme durchführt.

Das Nachstellglied bzw. die Kraft, die das Nachstellglied auf das Druckstück ausübt, soll erst dann zu einer Drehbewegung des Druckstücks führen, wenn dies aufgrund von Verschleiß notwendig ist, d. h. wenn auf das vordere Ende des Druckstücks keine bzw. keine wesentliche von dem Schraubritzel wegführende Kraft einwirkt (Abweisungskraft). Besonders einfach lässt sich dies dadurch realisieren, dass das Nachstellglied als Drehfeder ausgebildet ist. Wie einfach vorstellbar ist, lässt sich eine Drehbewegung, d. h. eine Bewegung des Druckstücks im Gewinde der Aufnahme erst dann realisieren, wenn an dem vorderen Ende des Druckstücks keine (wesentliche) entgegenwirkende Axialkraft anliegt, die eine Axialbewegung des Druckstücks verhindert.

Von Vorteil ist es, wenn das Nachstellglied, insbesondere in einer Ausgestaltung als Drehfeder derart gestaltet ist, dass eine einschraubende Bewegung des Druckstücks in das Gewinde, d. h. eine Bewegung des Druckstücks gegenüber der Aufnahme in eine von dem Schraubritzel wegweisende Richtung, nicht möglich ist. Dies ergibt sich im Regelfall bereits dadurch, dass die Gewindeverbindung zwischen dem Druckstück und der Aufnahme keine Drehbewegung durchführen kann, wenn lediglich eine Axialkraft auf das Druckstück wirkt. Erst wenn eine Drehbewegung auf das Druckstück wirkt, wie z. B. durch die Drehfeder, kann es zu einer Rotation des Druckstücks in der Aufnahme kommen.

Von Vorteil ist es, wenn die Drehfeder mit einem Ende an der Aufnahme und mit dem anderen Ende am Druckstück angeordnet ist. Dadurch kann die Drehfeder besonders einfach ein Drehmoment bzw. eine Drehbewegung auf das Druckstück ausüben. Erfindungsgemäß kann vorgesehen sein, dass die Aufnahme eine hülsenförmige Verlängerung aufweist und die Drehfeder innerhalb der hülsenförmigen Verlängerung zwischen dieser und dem Druckstück angeordnet ist. Das Druckstück durchdringt die Drehfeder vorzugsweise koaxial.

Von Vorteil ist es, wenn das Vorspannungsglied durch die Kraft der Drehfeder bzw. allgemein des Nachstellglieds vorgespannt ist.

Von Vorteil ist es ferner, wenn das Vorspannungsglied als Druckfeder ausgebildet ist. Ferner ist es von Vorteil, wenn das Vorspannungsglied, insbesondere in einer Ausgestaltung als Druckfeder, zwischen einer von dem Schraubritzel abgewandten Stirnseite der Aufnahme und dem Gehäuseteil angeordnet ist. Grundsätzlich kann das Vorspannungsglied bzw. die Druckfeder an einer beliebigen Stelle angeordnet sein, die geeignet ist, die Aufnahme in Richtung auf das Schraubritzel vorzuspannen. Die vorstehend erwähnte Anordnung hat sich jedoch als besonders geeignet herausgestellt.

Erfindungsgemäß kann ferner vorgesehen sein, dass zwischen einer von dem Schraubritzel abgewandten Stirnseite der Aufnahme und einem Boden des Gehäuseteils ein Endanschlag ausgebildet ist. Der Endanschlag kann dabei in einer vorteilhaften Ausführungsform ein Elastomer oder eine Federeinrichtung, vorzugsweise eine oder mehrere Tellerfedern, aufweisen.

Grundsätzlich kann ein beliebiges elastisches Dämpferelement an einer geeigneten Stelle der Aufnahme oder des Gehäuses vorgesehen sein, um dort einen Endanschlag auszubilden.

Erfindungsgemäß kann vorgesehen sein, dass der Endanschlag und das Vorspannungsglied, vorzugsweise in der Ausgestaltung als Druckfeder, an zwei unterschiedlichen Flächen der Aufnahme bzw. des Gehäuses angeordnet sind (Parallelanordnung). Erfindungsgemäß kann jedoch auch vorgesehen sein, dass das Vorspannungsglied bzw. die Druckfeder zwischen dem Endanschlag und der Stirnseite der Aufnahme eingespannt ist. Der Endanschlag, vorzugsweise in einer elastischen Ausgestaltung (Elastomer oder Feder), ist damit in Reihe geschaltet mit dem Vorspannungsglied, insbesondere der Druckfeder. Wie bereits erwähnt, kann jedoch auch eine parallele Anordnung des Endanschlags und des Vorspannungsglieds gewählt werden, wobei in diesem Fall vorzugsweise vorgesehen ist, dass der Endanschlag erst dann wirkt, wenn der Bewegungsweg der Aufnahme beendet bzw. begrenzt werden soll. Der Endanschlag dient zur Wegbegrenzung der Aufnahme und somit des in die Aufnahme eingeschraubten Druckstücks und begrenzt somit ein Zurückweichen des Druckstücks in eine von dem Schraubritzel abgewandte Richtung.

Von Vorteil ist es, wenn eine Transportsicherung vorgesehen ist, welche das Druckstück und das Gehäuseteil formschlüssig und verdrehsicher miteinander verbindet. Besonders vorteilhaft lässt sich dies dadurch realisieren, dass in einen Ringspalt zwischen dem Gehäuseteil und dem Druckstück ein ringförmiges Element (Transportsicherung) eingeschoben wird. Das ringförmige Element kann dabei einen Innendurchmesser bzw. eine Innenkontur aufweisen, die formschlüssig und verdrehsicher mit der Außenkontur bzw. dem Außenumfang des Druckstücks verbunden werden kann. Besonders einfach lässt sich dies erreichen, wenn der Innenumfang der ringförmigen Transportsicherung und der Außenumfang des Druckstücks in dem zur Verbindung vorgesehenen Bereich einen Querschnitt bzw. eine Querschnittsfläche aufweisen, die von einer Kreisform abweicht, beispielsweise an gegenüberliegenden Seiten abgeflacht ist. Dadurch wird vermieden, dass sich das Druckstück, wenn die ringförmige Transportsicherung aufgesetzt ist, gegenüber dieser verdrehen kann. Des weiteren kann der Außenumfang der Transportsicherung vorzugsweise so gestaltet sein, dass dieser formschlüssig und verdrehsicher mit einer entsprechenden Kontur oder Führung des Gehäuseteils, vorzugsweise einer oder mehreren Nuten, verbindbar ist. Dadurch wird eine Verdrehung der ringförmigen Transportsicherung gegenüber dem Gehäuseteil vermieden.

Es sind beliebige Varianten vorstellbar, die dazu führen, dass die Transportsicherung sowohl mit dem Gehäuseteil, vorzugsweise realisiert am Außenumfang der Transportsicherung als auch mit dem Druckstück, vorzugsweise realisiert am Innenumfang der Transportsicherung, so verbindbar ist, dass sich eine Verdrehsicherung gegenüber diesen Teilen ergibt.

Erfindungsgemäß kann vorgesehen sein, dass das Gehäuseteil eine Führung für die Transportsicherung aufweist, so dass die Transportsicherung gegenüber dem Gehäuseteil geführt verschoben werden kann. Dabei kann vorgesehen sein, dass nur in einer bestimmten axialen Position der Transportsicherung gegenüber dem Druckstück ein formschlüssiger, verdrehsicherer Eingriff gegeben ist. Sobald diese axiale Position verlassen wird, wird die formschlüssige Verbindung zwischen der Transportsicherung und dem Druckstück freigegeben, so dass eine Drehbewegung des Druckstücks gegenüber dem Gehäuseteil nicht durch die Transportsicherung behindert wird. Vorzugsweise kann dabei vorgesehen sein, dass weiterhin die Transportsicherung verdrehsicher mit dem Gehäuseteil verbunden und/oder in diesem geführt ist.

Von Vorteil ist es, wenn die Transportsicherung axial gegenüber dem Druckstück verschieblich ist und ein Mittel vorgesehen ist, welches die Transportsicherung bei einer Montage der Vorspannungseinrichtung in das Schraubgetriebegehäuse axial gegenüber dem Druckstück verschiebt und dadurch die formschlüssige und verdrehsichere Verbindung zwischen dem Druckstück und dem Gehäuseteil der Vorspannungseinrichtung freigibt.

Vorzugsweise wird die Transportsicherung dabei in Richtung auf die Aufnahme in das Gehäuseteil der Vorspannungseinrichtung eingeschoben und verbleibt dort.

Um eine einfache Nachstellung zu ermöglich, ist es von Vorteil, wenn ein Ende des Schraubritzels in einem Loslager gelagert ist. Eine geeignete Ausgestaltung eines

Loslagers ergibt sich beispielsweise aus der DE 10 2005 035 020 A1 und der DE 10 2007 055 814 A1. Vorzugsweise ist das Loslager dabei in einer Lagerbuchse bzw. einer Schwenkbuchse radial so fixiert, dass das Schraubritzel in Richtung des Schraubrads verschwenkbar ist.

Damit das Lager des Schraubritzels durch die Vorspannungseinrichtung entsprechend radial bewegt werden kann, ist auch die Ausbildung einer einfach vorstellbaren und deshalb nicht näher dargestellten Nut oder eines Langlochs denkbar. Möglich ist außerdem der Einsatz eines Schwenk- oder Pendellagers.

Zur Lagerung des Schraubritzels ist vorzugsweise ein zweites Lager vorgesehen, welches das Schraubritzel vorzugsweise am anderen Ende lagert. Hierbei ist der Einsatz eines Festlagers von Vorteil, welches vorzugsweise einen kleinen Schwenkwinkel zulässt, so dass die durch die Vorspannungseinrichtung bewirkte Schwenkbewegung des Schraubritzels nicht behindert wird. Die festlagerseitige Lagerung des Schraubritzels erfolgt vorzugsweise durch ein Wälzlager.

Vorzugsweise ist auch auf der Loslagerseite ein Wälzlager vorgesehen. Hierbei kann vorgesehen sein, dass der Außenring des Wälzlagers in einer vorstehend beschriebenen Lagerbuchse oder einer Schwenkbuchse radial fixiert ist.

Von Vorteil ist es, wenn die Vorspannungseinrichtung das Schraubritzel über das Loslager in die Verzahnung des Schraubrads drückt.

Von Vorteil ist es, wenn das Schraubradgetriebe als Schneckengetriebe ausgebildet ist, wobei das Schraubrad als Schneckenrad und das Schraubritzel als Schnecke ausgebildet ist und wobei die Schnecke mit dem Schneckenrad in Eingriff steht.

Das Druckstück ist vorzugsweise als Druckbolzen ausgebildet. Das die Aufnahme aufnehmende Gehäuseteil ist vorzugsweise als Stutzen ausgebildet, welcher eine Umfangswandung und ein Bodenteil aufweist.

Ferner ist es von Vorteil, wenn eine elektrische Hilfskraftlenkung für Kraftfahrzeuge mit einem Schraubradgetriebe bzw. einem Schneckenradgetriebe realisiert wird, das eines oder mehrere Merkmale des vorstehend beschriebenen Schraubradgetriebes bzw. Schneckengetriebes aufweist.

Vorteilhafte Ausgestaltungen ergeben sich aus den weiteren abhängigen Ansprüchen. Nachfolgend ist ein Ausführungsbeispiel der Erfindung anhand der Zeichnung prinzipmäßig dargestellt.

Es zeigt:
Fig. 1 einen prinzipmäßigen Aufbau eines Schraubradgetriebes mit einer erfindungsgemäßen Vorspannungseinrichtung;
Fig. 2 eine Draufsicht auf eine erfindungsgemäße Vorspannungseinrichtung aus Pfeilrichtung II der Fig. 3;
Fig. 3 einen Längsschnitt durch eine erfindungsgemäße Vorspannungseinrichtung nach der Linie III-III der Fig. 2, wobei eine Transportsicherung entsichert ist;
Fig. 4 einen Schnitt durch eine erfindungsgemäße Vorspannungseinrichtung nach Fig. 3, wobei die Transportsicherung gesichert ist; und
Fig. 5 einen Schnitt durch eine zweite Ausführungsform einer erfindungsgemäßen Vorspannungseinrichtung.

Der grundsätzliche Aufbau eines Schraubradgetriebes bzw. eines Schneckengetriebes, insbesondere auch für dessen Einsatz in einer elektrischen Hilfskraftlenkung für Kraftfahrzeuge, ist aus dem allgemeinen Stand der Technik hinlänglich bekannt, wozu beispielsweise auf die DE 101 61 715 A1 und die DE 10 2008 000 506 A1 verwiesen wird, weshalb nachfolgend nur die für die Erfindung wesentlichen Merkmale näher beschrieben werden. Hinsichtlich einer vorteilhaften Gestaltung eines Loslagers wird beispielsweise auf die in der DE 10 2007 055 814 A1 und die in der DE 10 2005 035 020 A1 beschriebenen Lösungen verwiesen.

Im Rahmen der Erfindung und des nachfolgend dargestellten Ausführungsbeispiels soll durch die Offenbarung der Erfindung anhand eines Schraubradgetriebes analog auch ein Schneckengetriebe als offenbart angesehen werden. Dabei entspricht das Schraubritzel der Schnecke und das Schraubrad dem Schneckenrad.

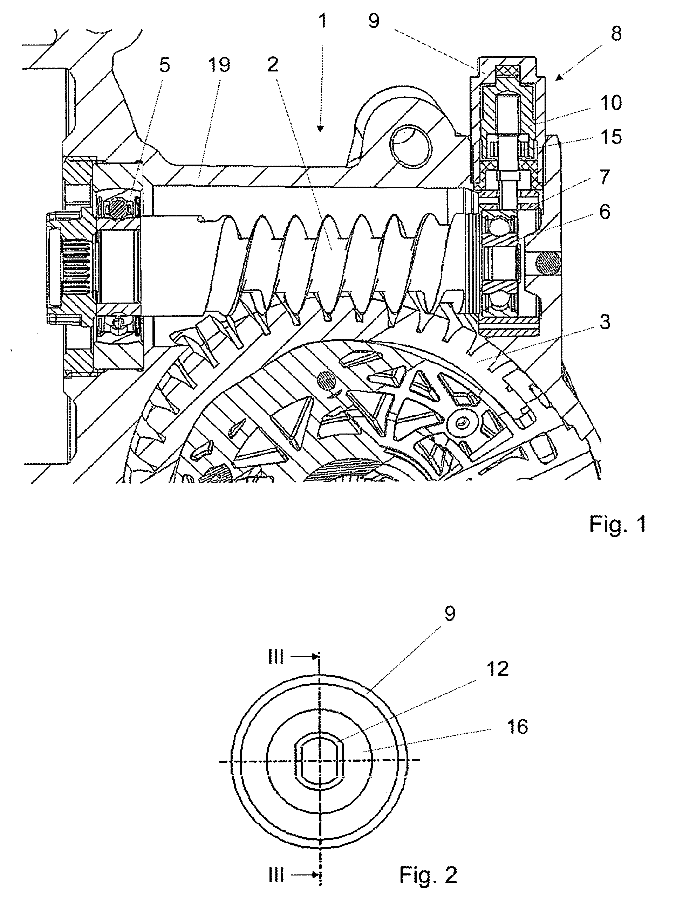

Fig. 1 zeigt ein Schraubradgetriebe 1 einer nicht näher dargestellte Lenkung, insbesondere einer elektrischen Hilfskraftlenkung eines Kraftfahrzeugs. Das Schraubradgetriebe 1 weist dabei ein Schraubritzel 2 auf, welches in ein Schraubrad 3 eingreift. Das Schraubrad 3 ist im Ausführungsbeispiel aus Kunststoff gebildet.

Die Lagerung des Schraubritzels 2 erfolgt festlagerseitig durch ein Wälzlager 5, welches einen kleinen Schwenkwinkel zulässt. Das Schraubritzel 2 kann an diesem Ende über eine Kupplung mit einer Antriebswelle eines elektrischen Antriebsmotors verbunden sein. Das andere Ende des Schraubritzels 2 ist in einem Loslager 6 gelagert. Im Ausführungsbeispiel ist das Loslager 6 ebenfalls durch ein Wälzlager realisiert. Der Außenring des Loslagers 6 wird in einer Lagerbuchse 7 radial fixiert. Die Lagerbuchse 7 ist vorzugsweise in Richtung des Schraubrads 3 verschwenkbar.

Das Schraubritzel 2 wird über das Loslager 6 durch eine Vorspannungseinrichtung 8 mit einer bestimmten Kraft in die Verzahnung des Schraubrads 3 gedrückt.

Wie sich aus den Figuren 2 bis 5 ergibt, weist die Vorspannungseinrichtung 8 ein Gehäuseteil 9, eine Aufnahme 10, ein Vorspannungsglied 11 und ein Druckstück 12 auf. Die Aufnahme 10 ist in dem Gehäuseteil 9 axial verschiebbar und verdrehsicher geführt und drückt mit ihrer Stirnfläche gegen das Vorspannungsglied 11, welches im Ausführungsbeispiel als Druckfeder zur Erzeugung des Grundspiels ausgebildet ist. Die Druckfeder 11 stützt sich dabei im Gehäuseteil 9 ab. Im Ausführungsbeispiel stützt sich die Druckfeder 11 am Boden des Gehäuseteils 9 ab. Das Druckstück 12 ist in ein Gewinde 13, im Ausführungsbeispiel ein Innengewinde der Aufnahme 10 eingeschraubt. Das Druckstück 12 ragt im Ausführungsbeispiel in Richtung auf das Schraubritzel 2 über die Aufnahme 10 und über das Gehäuseteil 9 hinaus.

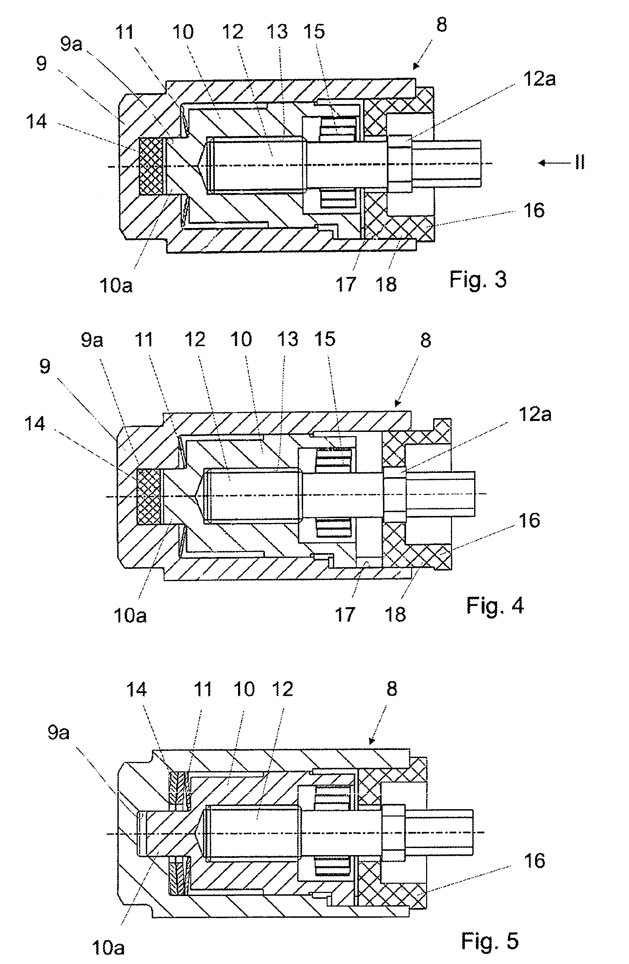

Aufgrund der Gewindeverbindung zwischen dem Druckstück 12 und der Aufnahme 10 bewegt sich die Aufnahme 10 axial in dem Gehäuseteil 9, wenn das Druckstück 12 angeregt durch eine entsprechende Bewegung des Schraubritzels 2 zu einer Axialbewegung veranlasst wird. Eine Begrenzung des Weges des Druckstücks 12 bzw. der mit dem Druckstück 12 verbundenen Aufnahme 10 wird im Ausführungsbeispiel durch einen Endanschlag 14 erreicht. In dem in den Figuren 3 und 4 dargestellten Ausführungsbeispiel wird der Endanschlag 14 durch ein Elastomer gebildet. In dem in Figur 5 dargestellten Ausführungsbeispiel wird der Endanschlag 14 durch zwei Tellerfedern gebildet.

Die in den Figuren 3 und 4 dargestellte Ausführungsform könnte alternativ zu einer Ausgestaltung des Endanschlags 14 als Elastomer auch einen beliebigen elastischen Dämpfer, insbesondere auch eine Federeinrichtung, beispielsweise eine oder mehrere Tellerfedern, aufweisen. Die in den Figuren 3 und 4 dargestellte Ausführungsform unterscheidet sich von der in Figur 5 dargestellten Ausführungsform unter anderem darin, dass die Druckfeder 11 für das Grundspiel zwischen dem Endanschlag 14 und der dem Endanschlag 14 zugewandten Stirnseite der Aufnahme 10 eingespannt ist. Dadurch wird die Druckfeder 11 für das Grundspiel und der Endanschlag 14 hinsichtlich ihrer Wirkung in Reihe geschaltet. Es handelt sich bei der in Figur 5 dargestellten Ausgestaltung des Endanschlages 14 zwar um eine Federeinrichtung, genauer zwei Tellerfedern, es kann jedoch ein beliebiger elastischer Dämpfer (z. B. eine Federeinrichtung oder ein Elastomer) eingesetzt werden, auf dem sich die Druckfeder 11 für das Grundspiel abstützt.

Wie sich ferner aus den Figuren 3, 4 und 5 ergibt, ist es von Vorteil, wenn die Aufnahme 10 an ihrem dem Schraubritzel 2 abgewandten Ende eine Verlängerung 10a aufweist, die in eine daran angepasste Bohrung 9a des Gehäuseteils 9 ragt. Dadurch wird die Führung der Aufnahme 10 in dem Gehäuseteil 9 verbessert bzw. stabilisiert. Die Bohrung 9a in dem Gehäuseteil 9 ist dabei vorzugsweise als Sackbohrung ausgebildet und kann, wie in den Figuren 3 und 4 dargestellt, mit dem Endanschlag 14 (in einer beliebigen Ausgestaltung) versehen sein. Grundsätzlich ist es auch möglich, in der Sackbohrung 9a die Druckfeder 11 und/oder den Endanschlag 14 anzuordnen. Die Verlängerung 10a ist vorzugsweise koaxial zu der Aufnahme 10 angeordnet.

Die Figuren 3 und 4 zeigen eine Abstufung der von dem Schraubritzel 2 abgewandten Stirnseite der Aufnahme 10 mit einer Ausbildung der Verlängerung 10a in deren Zentrum. Die Abstufung bietet den Vorteil, dass, insofern dies gewünscht sein sollte, der Endanschlag 14 und die Druckfeder 11 zur Erzeugung des Grundspiels axial voneinander getrennt angeordnet sind.

Wie sich aus den Figuren 1 bis 5 ergibt, ist ein Nachstellglied 15 vorgesehen, welches auf das Druckstück 12 eine Kraft ausübt, die geeignet ist, eine Drehbewegung des Druckstücks 12 zu bewirken. Die Drehbewegung des Druckstücks 12 wird durch die Gewindeverbindung des Druckstücks 12 mit der Aufnahme 10 in eine Axialbewegung des Druckstücks 12 gegenüber der Aufnahme 10 in Richtung auf das Schraubritzel 3 umgewandelt.

Das Nachstellglied ist im Ausführungsbeispiel als Drehfeder 15 ausgebildet. Die Drehfeder 15 ist mit einem Ende an der Aufnahme 10 und mit dem anderen Ende am Druckstück 12 festgelegt.

Durch die Kraft der Drehfeder 15 ist die Druckfeder 11 für das Grundspiel leicht vorgespannt. Wird kein oder nur ein kleines Drehmoment vom Getriebe übertragen, ist die Druckfeder 11 für das Grundspiel wirksam und kompensiert z. B. Temperaturausdehnungen sowie Rundlauftoleranzen und stellt somit das Grundspiel dar. Sobald das zu übertragende Drehmoment einen bestimmten Wert überschreitet, sind die Verzahnungskräfte so groß, dass die maximal zu übertragende Kraft der Druckfeder 11 für das Grundspiel überschritten wird und sich die Aufnahme 10 über den Endanschlag 14 am Gehäuseteil 9 abstützt. Dadurch wird gewährleistet, dass der Weg des Schraubritzels 2 in dieser Richtung (Abweisrichtung) begrenzt ist.

Die Nachstellung wird im Ausführungsbeispiel dadurch realisiert, dass sich in der Aufnahme 10 das bereits beschriebene Gewinde 13 befindet, in welches das Druckstück 12 eingeschraubt ist. Die Drehfeder 15, die bei deren Montage vorgespannt ist, generiert aufgrund deren Einspannung zwischen der Aufnahme 10 und dem Druckstück 12 ein Drehmoment auf das Druckstück 12. Dieses Drehmoment erzeugt im Zusammenspiel mit der Steigung des Gewindes 13 eine Kraft in Richtung der Druckstückachse. Diese Kraft sorgt für eine kontinuierliche Nachstellung des Druckstücks 12 in Richtung Schraubrad 3, sobald dies z. B. aufgrund von Verschleiß notwendig ist. Damit wird sichergestellt, dass die Anfederkraft durch die Vorspannungseinrichtung 8 über die gesamte Betriebsdauer des Getriebes nahezu konstant ist.

Die Figuren 3 und 5 zeigen eine Transportsicherung 16 im ungesicherten Zustand. Die Figur 4 zeigt eine Transportsicherung 16 im gesicherten Zustand. Die Aufgabe der Transportsicherung 16 ist es, die Vorspannung der Drehfeder 15 nach der Montage der Vorspannungseinrichtung 8 aufrecht zu erhalten. Dies geschieht über einen Formschluss zwischen dem Druckstück 12 und der Transportsicherung 16 sowie zwischen der Transportsicherung 16 und dem Gehäuseteil 9 sowie zwischen dem Gehäuseteil 9 und der Aufnahme 10, der eine Relativverdrehung der Bauteile verhindert. Bei der Montage der Vorspannungseinrichtung 8 in das Schraubradgetriebe 1 bzw. dessen Gehäuse 19, so wie dies in der Figur 1 dargestellt ist, wird die Transportsicherung 16 durch ein nicht näher dargestelltes Mittel (beispielsweise den Außenumfang der Lagerbuchse 7) relativ zum Gehäuseteil 9 der
Vorspannungseinrichtung 8 axial verschoben und gibt dabei das Druckstück 12 frei (siehe Figuren 1, 3 und 5).

Wie sich aus einer Zusammenschau der Figuren 2 bis 5 ergibt, weist die Transportsicherung 16 eine im Wesentlichen ringförmige Form auf, wobei eine Bohrung im Inneren der ringförmigen Transportsicherung 16 einen Querschnitt (bzw. eine Querschnittsfläche) aufweist, der von einer Kreisform abweicht und der Außendurchmesser des Druckstücks 12 in dem Bereich, in dem die Verbindung formschlüssig hergestellt werden soll, an diese Form angepasst ist. Eine relative Drehbewegung zwischen der Transportsicherung 16 und dem Druckstück 12 ist somit nicht möglich. Zur formschlüssigen Verbindung der Transportsicherung 16 mit dem Gehäuseteil 9 weist dieses eine Nut 17 (gegebenenfalls auch mehrere Nuten) auf, in die entsprechende Gegenstücke, beispielsweise entsprechende Vorsprünge 18, der Transportsicherung 16 eingeschoben werden können. Ein entsprechender Vorsprung 18 der Transportsicherung 16 ist in Figur 3 und 4 bezeichnet. Dadurch wird zwischen der Transportsicherung 16 und dem Gehäuseteil 9 eine verdrehsichere, formschlüssige Verbindung hergestellt. Der Vorsprung 18 kann vorzugsweise schienenförmig, stabförmig oder als sonstiges Nut-/ Federverbindungsglied ausgebildet sein.

Wie sich aus den Figuren 3 bis 5 ergibt, besteht die formschlüssige Verbindung zwischen der Transportsicherung 16 und dem Druckstück 12 nur in einem relativ begrenzten axialen Bereich. Sobald die Transportsicherung über diesen Bereich hinausgeschoben wird, löst sich die Verbindung zwischen der Transportsicherung 16 und dem Druckstück 12. In dem Bereich, in dem die formschlüssige Verbindung zwischen der Transportsicherung 16 und dem Druckstück 12 hergestellt werden soll, weist das Druckstück 12 eine entsprechende Umfangserweiterung 12a auf. Diese kann z. B. einstückig mit dem Druckstück oder als seperates mit dem Druckstück verbundenes Teil ausgebildet sein.

In den Ausführungsbeispielen ist das Druckstück als Druckbolzen 12 ausgebildet.

In einer alternativen und nicht näher dargestellten Ausführungsform kann auch vorgesehen sein, dass die Aufnahme 10 in dem Gehäuseteil 9 nicht verdrehgesichert gelagert ist, sondern nur axial verschieblich. Dies lässt sich durch bekannte Maßnahmen einfach erreichen. In diesem Fall ist die Aufnahme 10 in dem Gehäuseteil 9 verdrehbar, so dass sich eine relative Verdrehung des Druckstücks 12 gegenüber der Aufnahme 10, welche zu einer Axialbewegung des Druckstücks 12 gegenüber der Aufnahme 10 führt, auch durch eine Verdrehung der Aufnahme 10 in dem Gehäuseteil 9 einstellt. Ergänzend dazu kann optional vorgesehen sein, dass das Druckstück 12 gegenüber dem Gehäuseteil 9 oder einem anderen Teil des Schraubradgetriebes, beispielsweise des Gehäuses 19 des Schraubradgetriebes, verdrehsicher ist. In diesem Fall würde sich angeregt durch die Drehfeder 15 nur die Aufnahme 10 drehen können. Auch dies würde dazu führen, dass aufgrund der Drehbewegung der Aufnahme 10 und somit der Drehbewegung des Gewindes 13 das Druckstück 12 gegenüber der Aufnahme 10 in Richtung auf das Schraubritzel 2 axial bewegt wird. Insofern sowohl das Druckstück 12 als auch die Aufnahme 10 nicht verdrehgesichert sind, können sich beide Teile entsprechend bewegen.

Insofern die Aufnahme 10 gegenüber dem Gehäuseteil 9 nicht verdrehgesichert ist, kann vorgesehen sein, dass eine Transportsicherung eine Verdrehsicherung zwischen dem Gehäuseteil 9 und der Aufnahme 10 herstellt, bis die Vorspannungseinrichtung 8 in dem Gehäuse 19 des Schraubradgetriebes montiert ist.

Die Variante, bei der die Aufnahme 10 gegenüber dem Gehäuseteil 9 verdrehbar ist, kann ansonsten dieselben Merkmale aufweisen wie die im Ausführungsbeispiel beschriebene verdrehgesicherte Anordnung der Aufnahme 10 in dem Gehäuseteil 9, weshalb nachfolgend hierauf verwiesen wird.

### Bezugszeichenliste

- 1: Schraubradgetriebe
- 2: Schraubritzel
- 3: Schraubrad
- 4 5: Festlager (Wälzlager)
- 6: Loslager (Wälzlager)
- 7: Lagerbuchse
- 8: Vorspannungseinrichtung
- 9: Gehäuseteil
- 9a: Sackbohrung des Gehäuseteils
- 10: Aufnahme
- 10a: Verlängerung der Aufnahme
- 11: Vorspannungsglied/Druckfeder
- 12: Druckstück
- 12a: Umfangserweiterung des Druckstücks
- 13: Gewinde
- 14: Endanschlag
- 15: Nachstellglied/Drehfeder
- 16: Transportsicherung
- 17: Nut des Gehäuseteils
- 18: Vorsprung der Transportsicherung
- 19: Gehäuse des Schraubradgetriebes

## Patentansprüche

1. Schraubradgetriebe (1) für eine Lenkung eines Kraftfahrzeugs, mit einem Schraubritzel (2), welches in ein Schraubrad (3) eingreift, wobei eine Vorspannungseinrichtung (8) mit einem Druckstück (12) vorgesehen ist, welches das Schraubritzel (2) in eine Verzahnung des Schraubrads (3) drückt, wobei die Vorspannungseinrichtung (8) ein Gehäuseteil (9) aufweist, in dem eine Aufnahme (10) axial verschieblich gelagert ist,
**dadurch gekennzeichnet, dass**
a) die Aufnahme (10) ein Gewinde (13) aufweist, in das das Druckstück (12) eingeschraubt ist,
b) die Aufnahme (10) mittels eines Vorspannungsglieds (11) in Richtung auf das Schraubritzel (2) vorgespannt ist, und
c) ein Nachstellglied (15) vorgesehen ist, welches auf das Druckstück (12) eine Kraft ausübt, die eine relative Verdrehung des Druckstücks (12) gegenüber der Aufnahme (10) bewirkt, welche durch die Gewindeverbindung des Druckstücks (12) mit der Aufnahme (10) in eine Axialbewegung des Druckstücks (12) gegenüber der Aufnahme (10) in Richtung auf das Schraubritzel (2) umgewandelt wird.

2. Schraubradgetriebe nach Anspruch 1, **dadurch gekennzeichnet, dass** das Nachstellglied (15) eine Drehfeder ist.

3. Schraubradgetriebe nach Anspruch 2, **dadurch gekennzeichnet, dass** die Drehfeder (15) mit einem Ende an der Aufnahme (10) und mit dem anderen Ende am Druckstück (12) angeordnet ist, wobei die Drehfeder (15) ein Drehmoment auf das Druckstück (12) ausübt.

4. Schraubradgetriebe nach Anspruch 1, 2 oder 3, **dadurch gekennzeichnet, dass** das Vorspannungsglied (11) als Druckfeder ausgebildet und zwischen einer von dem Schraubritzel (2) abgewandten Stirnseite der Aufnahme (10) und dem Gehäuseteil (9) angeordnet ist.

5. Schraubradgetriebe nach einem der Ansprüche 1 bis 4, **dadurch gekennzeichnet, dass** zwischen einer von dem Schraubritzel (2) abgewandten Stirnseite der Aufnahme (10) und einem Boden des Gehäuseteils (9) ein Endanschlag (14) ausgebildet ist, welcher ein Elastomer oder eine Federeinrichtung aufweist.

6. Schraubradgetriebe nach Anspruch 5, **dadurch gekennzeichnet, dass** das Vorspannungsglied (11) zwischen dem Endanschlag (14) und der Stirnseite der Aufnahme (10) eingespannt ist.

7. Schraubradgetriebe nach einem der Ansprüche 1 bis 6, **dadurch gekennzeichnet, dass** eine Transportsicherung (16) vorgesehen ist, welche das Druckstück (12) und das Gehäuseteil (9) formschlüssig und verdrehsicher miteinander verbindet.

8. Schraubradgetriebe nach Anspruch 7, **dadurch gekennzeichnet, dass** die Transportsicherung (16) axial gegenüber dem Druckstück (12) verschieblich ist und ein Mittel vorgesehen ist, welches die Transportsicherung (16) bei einer Montage der Vorspannungseinrichtung (8) in ein Gehäuse (19) des Schraubradgetriebes (1) axial gegenüber dem Druckstück (12) verschiebt und dadurch die formschlüssige und verdrehsichere Verbindung zwischen dem Druckstück (12) und dem Gehäuseteil (9) freigibt.

9. Schraubradgetriebe nach einem der Ansprüche 1 bis 8, **dadurch gekennzeichnet, dass** das Schraubradgetriebe (1) als Schneckengetriebe ausgebildet ist, wobei das Schraubrad (3) als Schneckenrad und das Schraubritzel (2) als Schnecke ausgebildet ist und wobei die Schnecke mit dem Schneckenrad in Eingriff steht.

10. Elektrische Hilfskraftlenkung für Kraftfahrzeuge mit einem Schraubradgetriebe (1) nach einem der Ansprüche 1 bis 9.

## Claims

1. Helical gear mechanism (1) for a steering system of a motor vehicle, having a helical pinion (2) which engages into a helical gear (3), wherein a preload device (8) is provided which has a thrust piece (12) which pushes the helical pinion (2) into a toothing of the helical gear (3), wherein the preload device (8) has a housing part (9) in which a receptacle (10) is mounted in an axially displaceable manner,
**characterized in that**
a) the receptacle (10) has a thread (13) into which the thrust piece (12) is screwed,
b) the receptacle (10) is preloaded in the direction of the helical pinion (2) by means of a preload element (11), and
c) a readjustment element (15) is provided which exerts on the thrust piece (12) a force which effects a relative rotation of the thrust piece (12) with respect to the receptacle (10), which relative rotation is converted, by the threaded connection of the thrust piece (12) to the receptacle (10), into an axial movement of the thrust piece (12) relative to the receptacle (10) in the direction of the helical pinion (2).

2. Helical gear mechanism according to Claim 1, **characterized in that** the readjustment element (15) is a torsion spring.

3. Helical gear mechanism according to Claim 2, **characterized in that** the torsion spring (15) is arranged with one end on the receptacle (10) and with the other end on the thrust piece (12), wherein the torsion spring (15) exerts a torque on the thrust piece (12).

4. Helical gear mechanism according to Claim 1, 2 or 3, **characterized in that** the preload element (11) is in the form of a compression spring and is arranged between a face side, which faces away from the helical pinion (2), of the receptacle (10) and the housing part (9).

5. Helical gear mechanism according to one of Claims 1 to 4, **characterized in that** an end stop (14) which has an elastomer or a spring device is formed between a face side, which faces away from the helical pinion (2), of the receptacle (10) and a base of the housing part (9).

6. Helical gear mechanism according to Claim 5, **characterized in that** the preload element (11) is braced between the end stop (14) and the face side of the receptacle (10).

7. Helical gear mechanism according to one of Claims 1 to 6, **characterized in that** a transport lock (16) is provided which connects the thrust piece (12) and the housing part (9) to one another in a positively locking and rotationally fixed manner.

8. Helical gear mechanism according to Claim 7, **characterized in that** the transport lock (16) is displaceable axially with respect to the thrust piece (12), and a means is provided which, during mounting of the preload device (8) into a housing (19) of the helical gear mechanism (1), displaces the transport lock (16) axially relative to the thrust piece (12) and thereby releases the positively locking and rotationally fixed connection between the thrust piece (12) and the housing part (9).

9. Helical gear mechanism according to one of Claims 1 to 8, **characterized in that** the helical gear mechanism (1) is in the form of a worm gear mechanism, wherein the helical gear (3) is in the form of a worm gear and the helical pinion (2) is in the form of a worm, and wherein the worm is in engagement with the worm gear.

10. Electric power steering system for motor vehicles, having a helical gear mechanism (1) according to one of Claims 1 to 9.

## Revendications

1. Engrenage hypoïde (1) pour une direction d'un véhicule automobile, comprenant un pignon hélicoïdal (2) qui vient en prise dans une roue hypoïde (3), un dispositif de précontrainte (8) étant muni d'une pièce de pression (12) qui presse le pignon hélicoïdal (2) dans une denture de la roue hypoïde (3), le dispositif de précontrainte (8) présentant une partie de boîtier (9) dans laquelle est reçu de manière déplaçable axialement un logement (10),
**caractérisé en ce que**
a) le logement (10) présente un filetage (13) dans lequel est vissée la pièce de pression (12),
b) le logement (10) est précontraint au moyen d'un organe de précontrainte (11) dans la direction du pignon hélicoïdal (2), et
c) un organe de rattrapage (15) est prévu, lequel exerce sur la pièce de pression (12) une force qui provoque une rotation relative de la pièce de pression (12) par rapport au logement (10), laquelle est convertie par la connexion filetée de la pièce de pression (12) au logement (10) en un mouvement axial de la pièce de pression (12) par rapport au logement (10) dans la direction du pignon hélicoïdal (2).

2. Engrenage hypoïde selon la revendication 1, **caractérisé en ce que** l'organe de rattrapage (15) est un ressort de torsion.

3. Engrenage hypoïde selon la revendication 2, **caractérisé en ce que** le ressort de torsion (15) est disposé avec une extrémité au niveau du logement (10) et avec l'autre extrémité au niveau de la pièce de pression (12), le ressort de torsion (15) exerçant un couple sur la pièce de pression (12).

4. Engrenage hypoïde selon la revendication 1, 2 ou 3, **caractérisé en ce que** l'organe de précontrainte (11) est réalisé sous forme de ressort de compression et est disposé entre un côté frontal du logement (10) opposé au pignon hélicoïdal (2) et la partie de boîtier (9).

5. Engrenage hypoïde selon l'une quelconque des revendications 1 à 4, **caractérisé en ce qu'**entre un côté frontal du logement (10) opposé au pignon hélicoïdal (2) et un fond de la partie de boîtier (9) est réalisée une butée de fin de course (14) qui présente un élastomère ou un dispositif de ressort.

6. Engrenage hypoïde selon la revendication 5, **caractérisé en ce que** l'organe de précontrainte (11) est serré entre la butée de fin de course (14) et le côté frontal du logement (10).

7. Engrenage hypoïde selon l'une quelconque des revendications 1 à 6, **caractérisé en ce qu'**il est prévu une sécurité de transport (16) qui relie la pièce de pression (12) et la partie de boîtier (9) l'une à l'autre par engagement par correspondance géométrique et de manière non rotative.

8. Engrenage hypoïde selon la revendication 7, **caractérisé en ce que** la sécurité de transport (16) est déplaçable axialement par rapport à la pièce de pression (12) et un moyen est prévu, lequel déplace la sécurité de transport (16) axialement par rapport à la pièce de pression (12) dans le cas d'un montage du dispositif de précontrainte (8) dans un boîtier (19) de l'engrenage hypoïde (1) et libère ainsi la connexion par engagement par correspondance géométrique et non rotative entre la pièce de pression (12) et la partie de boîtier (9).

9. Engrenage hypoïde selon l'une quelconque des revendications 1 à 8, **caractérisé en ce que** l'engrenage hypoïde (1) est réalisé sous forme d'engrenage à vis sans fin, la roue hypoïde (3) étant réalisée sous forme de roue à denture hélicoïdale et le pignon hélicoïdal (2) étant réalisé sous forme de vis sans fin, la vis sans fin étant en prise avec la roue à denture hélicoïdale.

10. Direction assistée électrique pour véhicules automobiles, comprenant un engrenage hypoïde (1) selon l'une quelconque des revendications 1 à 9.
